# EUROPÄISCHE PATENTSCHRIFT

(11) **EP 0 794 859 B1**
(45) Veröffentlichungstag und Bekanntmachung des Hinweises auf die Patenterteilung: **26.07.2000**
(21) Anmeldenummer: 96932373.2
(22) Anmeldetag: 04.10.1996
(51) Int. Cl.: B32B 5/18, B32B 5/28, B32B 27/04, B32B 31/00

(54) **Verfahren zur Herstellung einer Sandwichplatte**
Process for manufacturing a composite panel
Procédé de fabrication d'une plaque stratifiée

(30) Priorität: 04.10.1995 AT 164395
(43) Veröffentlichungstag der Anmeldung: 17.09.1997
(73) Patentinhaber: ISOSPORT VERBUNDBAUTEILE GESELLSCHAFT MBH, 7000 Eisenstadt (AT)
(72) Erfinder: ERHARDT, Günter, A-7061 Trausdorf (AT)
(74) Vertreter: Dungler, Karin
(86) Internationale Anmeldenummer: AT9600186
(87) Internationale Veröffentlichungsnummer: WO9712756

(56) Entgegenhaltungen:
- EP-A- 0 383 199
- EP-A- 0 393 476
- EP-A- 0 605 235
- EP-A- 0 657 281
- DE-A- 2 545 700
- GB-A- 1 426 077
- US-A- 4 596 736

## Beschreibung

### Technisches Gebiet

Die Erfindung betrifft ein Verfahren zur Herstellung einer Sandwichplatte bestehend aus einer geschäumten, thermoplastischen Kernschicht, welche beidseitig mit glasfasermattenverstärkten, thermoplastischen Außenschichten kleberfrei verbunden ist.

### Stand der Technik

Sandwichplatten sind Mehrschichtverbundwerkstoffe, die aus einer oder mehreren Kernschichten sowie mit dieser(n) verklebten Außenschichten bestehen. Sie werden beispielsweise für die Innenausstattung von Kraftfahrzeugen verwendet. Dabei wird die Sandwichplatte hohen mechanischen Belastungen ausgesetzt. Es würden sich daher zumindest an den Außenschichten Grundmaterialien auf Basis von Metallen anbieten. Diese sind jedoch aufgrund ihres hohen Gewichtes insbesondere für die Innenausstattung von Personenkraftwagen ungeeignet.

Es werden daher bevorzugt Sandwichplatten auf Basis von leichtem Sperrholz für die Innenausstattung von Personenkraftwagen eingesetzt. Diese Sperrholz-Sandwichplatten bestehen aus einer meist ungeraden Anzahl - mindestens 3 bis 15 - aufeinander geleimter, dünner Holzschichten, wobei die Faserrichtung benachbarter Lagen meist um 90° gegeneinander versetzt ist. Die Verleimung erfolgt vorzugsweise mit Kunstharz-Klebstoffen unter Druck und erhöhter Temperatur, wobei Werkstoffe hoher Festigkeit entstehen.

Diese weisen jedoch den Nachteil auf, daß sie materialmäßig inhomogen, bedingt durch die Kleberschichten aufgebaut sind. Durch den materialmäßig inhomogenen Sandwichaufbau können ferner Fehlerstellen mit verschlechterten mechanischen Werten hervorgerufen werden.

Ferner weist Sperrholz den Nachteil auf, in hohem Maß Feuchtigkeit aus der Luft aufzunehmen, wodurch ebenso die mechanischen Werte wie die Biegefestigkeitswerte verschlechtert werden.

Um nunmehr den materialmäßig inhomogenen Aufbau bei Sandwichplatten zu vermeiden, wurde versucht, auf die Kleberschicht zu verzichten. Gemäß der EP-A-605 235 werden demgemäß Sandwichbauteile bestehend aus einem Schaumstoffkern und beidseitig an diesen Schaumstoffkern angebrachte glasfaserverstärkte Kunststoffe angegeben, bei welchen keinerlei Kleber zwischen Schaumstoffkern und glasfaserverstärkter Kunststoffschicht eingesetzt wird.

Ebensowenig ist gemäß der DE-A-2545700 der Zusatz von Klebstoff bei der Herstellung von selbsttragenden Formkörpern bestehend aus glasfaserverstärkten Thermoplasten und geschäumten Kunststoff notwendig.

Mehrlagige Bauelemente dieser Art werden ebenso in der EP-A-657 281 beschrieben, wobei ein Kunststoffschaumkern beidseitig mit Deckschichten versehen wird, wobei die Deckschichten aus Thermoplast-Kunststoff-Matrix Gebilde mit darin eingebetteten Fasern bzw. Fäden bestehen.

Gemäß der EP-A-393 476 wird allgemein auf ein Verfahren zur Herstellung dieser Sandwichplatten durch bekannte Formpreßverfahren eingegangen. Diese vorbekannten Verfahren werden diskontinurierlich unter Anwendung von Formwerkzeugen geführt, so daß lediglich die Sandwichplatte in Form von Stückgut bereitgestellt werden kann. Ferner ist der Einsatz von Formwerkzeug mit hohen Engerieverlusten verbunden, da für die Herstellung der Sandwichplatte das Formwerkzeug aufgeheizt und unmittelbar nach Herstellung der Sandwichplatte dieses wieder rückgekühlt werden muß.

Erfindungsgemäß wird ein Verfahren zur Herstellung einer Sandwichplatte der eingangs genannten Art vorgeschlagen, welches dadurch gekennzeichnet ist, daß
1) für die Ausbildung der Außenschichten (25, 25') in Form von glasfasermattenverstärkten Thermoplasten gleichzeitig zwei Glasfasermatten (10, 11) durch die Düsenspalte (3', 4') der Imprägnierdüsen (3, 4) geführt werden, welche von den Extrudern (1, 2) mit den Thermoplastschmelzen (26, 28) regelbar gespeist werden, und daß jeweils zwei Schmelzströme (26', 26" und 28', 28") gebildet werden, welche am Düsenspaltausgang (27, 27') auf die Ober- und Unterseite der Glasmatten (10, 11) aufgetragen werden, wobei die Vorimprägnierung der Glasfasermatten stattfindet, und daß
2) diese mit Thermoplast vorimprägnierten Glasmatten (30, 30') zusammen mit dem durch den Extruderdüsenspalt (37) transportierten, geschäumten Thermoplasten (39'), welcher zur Ausbildung der Kernschicht (39) dient, in den Einlaufwalzenspalt (18) der Doppelbandpresse (5) geführt werden, wobei die vorimprägnierten Glasfasermatten einerseits vorkalibriert und andererseits ohne Zusatz eines Klebers beidseitig auf den geschäumten Thermoplasten (39') kaschiert werden, sodaß ein Vorverbund (36) gebildet wird, welcher anschließend unter Druck mittels der Kühlplatten (22, 22') zu der Sandwichplatte (40) verpreßt wird. Vorteilhafterweise werden die thermoplastischen Materialien für die Kern-und Außenschichten aus derselben Gruppe von Kunststoffen, vorteilhafterweise aus der Gruppe der Polyolefine ausgewählt. Dabei wird besonders bevorzugt Polyproplyen eingsetzt.
Vorteilhafterweise werden die Glasfasermatten (10, 11) im Düsenspalt (3', 4') und der geschäumte Thermoplast (39') im Düsenspalt (37) vorgewärmt.

Weitere bevorzugte Ausführungen des erfindungsgemäßen Verfahrens bestehen darin, daß als Thermoplastschmelze (26, 28) eine niedrigviskose Polypropylen-Schmelze, welche gegebenenfalls Additive wie Peroxide enthält, eingesetzt wird und der Schmelzstrom (26', 26") und (28', 28") durch den im Verteilerblock (8, 9) angebrachten Schmelzschieber (29, 29') regelbar ist.

Nach einer weiteren bevorzugten Ausführung des erfindungsgemäßen Verfahrens besteht die Glasfasermatte aus geschnittenen, wirr gelegten und/oder unidirektionalen und/oder direktionalen ungeschnittenen Glasfasern mit einem Flächengehalt von 450 bis 1300 g/m².

Ferner wird erfindungsgemäß vorzugsweise vorgeschlagen, daß die vorimprägnierten Glasfasermatten (30, 30') im in seinem Querschnitt verstellbaren Einlaufwalzenspalt (18) vorkalibriert werden.

Weitere bevorzugte Ausführungen des erfindungsgemäßen Verfahrens sind dadurch gekennzeichnet, daß der Vorverbund (36) für die Sandwichplatte (40) in der Druckzone mit max. 2 bar verpreßt wird und der durch den Extruderdüsenspalte (37) transportierte geschäumte Thermoplast (39') aus Polypropylen besteht.

Die nach dem erfindungsgemäßen Verfahren hergestellten Sandwichplatte werden beispielsweise für die Herstellung von Formteilen für die Ausstattung von Kraftfahrzeugen verwendet.

### Beschreibung der Zeichnungen und ein Weg zur Ausführung der Erfindung

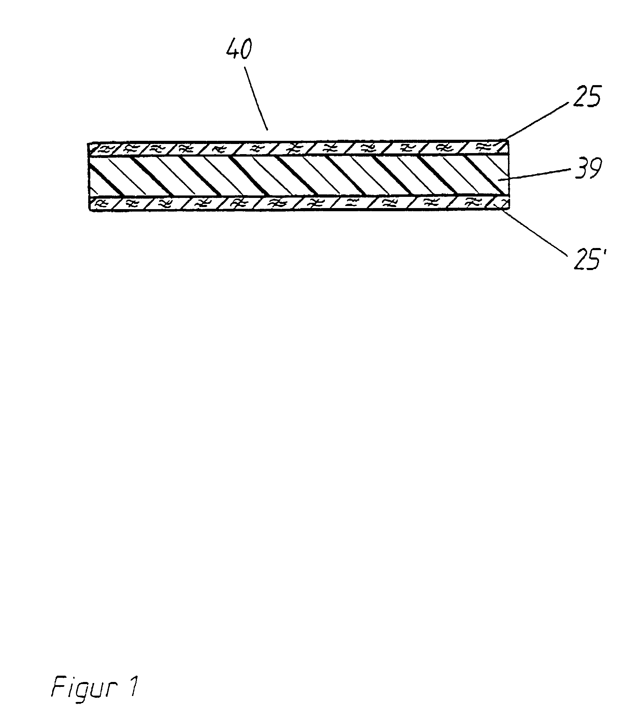

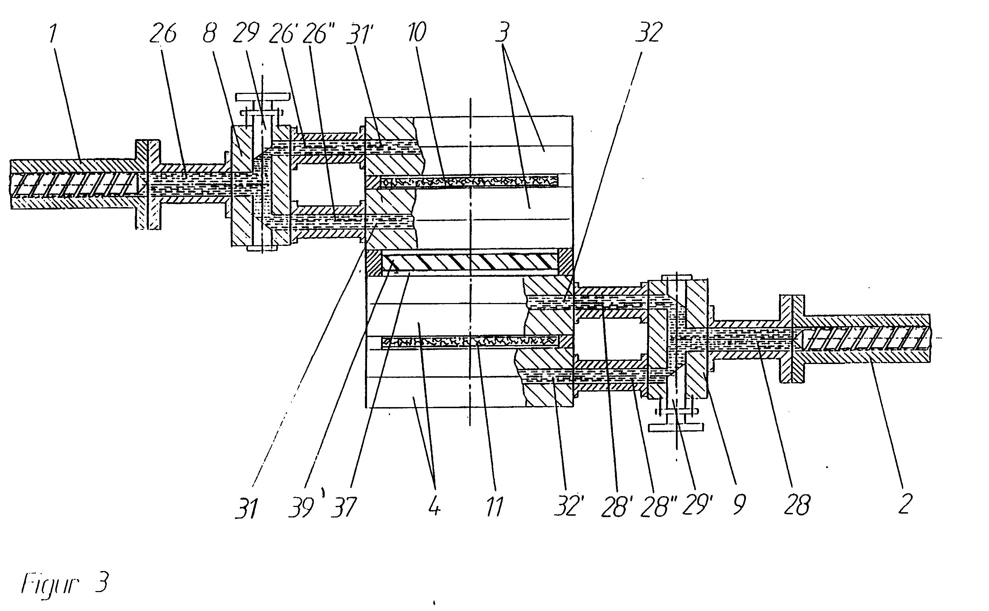

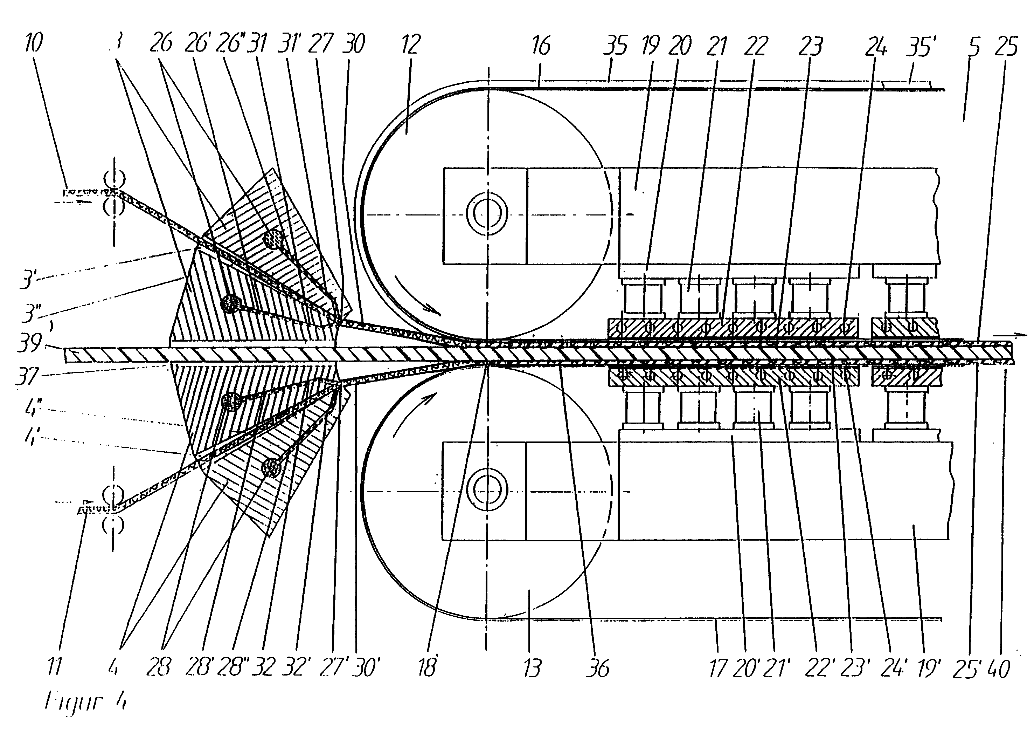

Die Erfindung wird nunmehr anhand der Fig. 1 - 4 erläutert.

Fig. 1 zeigt die erfindungsgemäß hergestellt Sandwichplatte (40), welche an beiden Seiten des geschäumten, thermoplastischen Kerns (39) die glasmattenverstärkten thermoplastischen Außenschichten (25, 25') aufweist.

Fig. 2 zeigt im wesentlichen die Extruder (1, 2), die Imprägnierdüsen (3, 4) und die Doppelbandpresse (5).

Fig. 3 zeigt den Ausschnitt aus Fig. 1 betreffend die Extrudereinheiten (1) und (2), die Regeleinheiten (8) und (9) mit den Schmelzschiebern (29, 29'), sowie die Imprägnierdüsen (3, 4).

Fig. 4 zeigt den Ausschnitt gemäß Fig. 1 betreffend die Imprägnierdüsen (3, 4) und die Einlaufwalzenrollen (12, 13) der Doppelbandpresse.

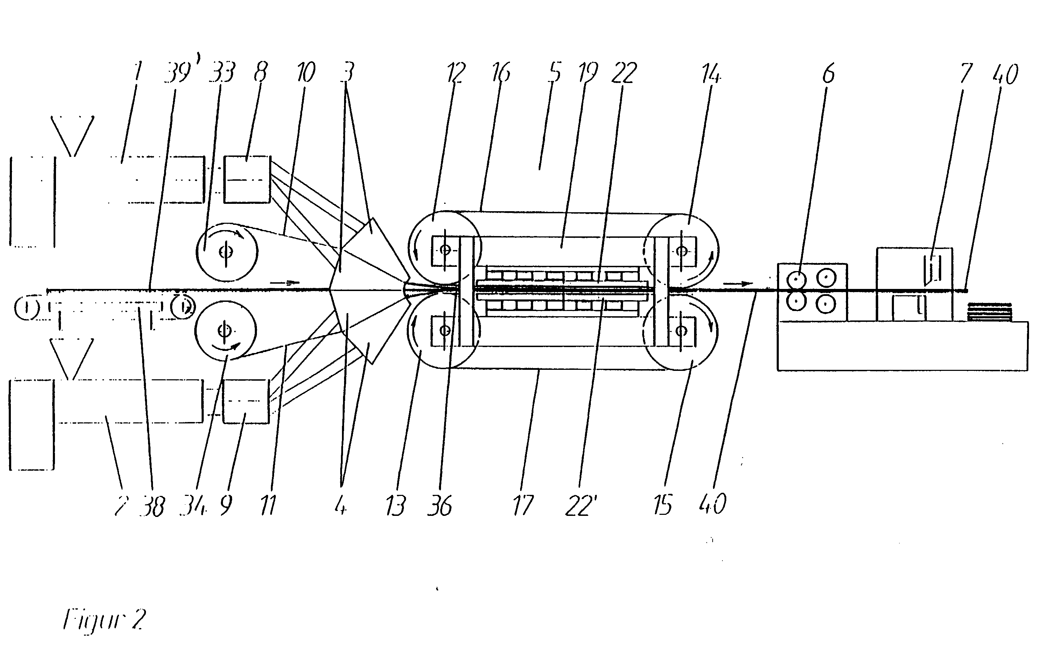

Das Verfahren zur Herstellung der erfindungsgemäßen Sandwichplatte wird wie folgt durchgeführt. Zur Herstellung der Kernschicht (39) wird der geschäumte Thermoplast insofern hergestellt, daß beispielsweise Polypropylen in Granulatform mit einem Treibmittel, welches ebenso in Granulatform vorliegt, vermischt wird und in einen Extruder (nicht dargestellt) auf Schmelztemperatur erhitzt wird. Dabei zerfällt das Treibmittel in gasförmige Verbindungen, welche in die Polypropylenmatrix eindringen können, sodaß diese aufschäumt. Dieser geschäumte Thermoplast (39') wird für die weitere Verfahrensführung gemäß Fig. 2 auf dem Transporttisch (38) aufgebracht und in der Folge durch den Extruderdüsenspalt (37) transportiert. Für die Ausbildung der Außenschichten (25, 25') der erfindungsgemäß hergestellten Sandwichplatte (40) wird in die Extruder (1, 2) ein Thermoplast, beispielsweise Polypropylen, welcher gegebenenfalls mit Additiven wie Peroxiden versetzt ist, zugeführt. In den auf mindestens die Schmelztemperatur des Thermoplasten aufgeheizten Extrudern (1, 2) wird der Thermoplast aufgeschmolzen und in Form der Thermoplastschmelzen (26) und (28) den Regeleinheiten (8) und (9) zugeführt. In der Regeleinheit (8, 9) kann der Schmelzstrom durch die Maßnahme eines Schmelzschiebers (29, 29') reguliert werden; es werden die Schmelzströme (26', 26") und (28', 28") gebildet, welche den Düsenschlitzen (31, 31') der Imprägnierdüse (3) und (32) und (32') der Imprägnierdüse 4 zugeführt werden. Die Imprägnierdüsen (3, 4) werden mindestens auf die Schmelztemperatur des Thermoplasten erhitzt.

Von den Vorratsrollen (33, 34) werden die Glasfasermatten (10, 11) den Imprägnierdüsen (3, 4) zugeführt. Diese Glasfasermatten können beispielsweise genadelte Wirrfasermatten mit einem Flächengehalt von 450 bis 1300 g/m² sein.

Die Zuführung dieser Glasfasermatten (10, 11) erfolgt derart, daß sie die vorgewärmten Düsenspalten (3',4') passieren. Die Düsenspalten (3', 4') sind derart ausgeführt, daß sie zum Düsenspaltausgang (27, 27') hin konisch verlaufend sind. Der Düsenspaltquerschnitt ist daher beim Düsenspalteingang (3", 4") breiter als am Düsenspaltausgang (27, 27'). Am Düsenspaltausgang (27, 27') werden die Thermoplastschmelzströme (26', 26" bzw. 28', 28") auf die Ober- und Unterseite der Glasfasermatten (10, 11) aufgetragen, sodaß bereits am Düsenspaltausgang (27, 27') die vorimprägnierung der Glasfasermatten erfolgt. Durch diese Maßnahme erfolgt eine gleichmäßige Durchtränkung der Glasfasermatten, wobei das Ausmaß der Durchtränkung durch die Maßnahme der Reguliereinheiten (8, 9) eingestellt wird. Dadurch können die Eigenschaften, beispielsweise die Oberflächeneigenschaften, der glasfasermattenverstärkten Außenschichten (25, 25') wesentlich beeinflußt werden.

Die beidseitig vorimprägnierten Glasfasermatten werden anschließend gemeinsam mit dem geschäumten Thermoplasten (39') in den Einlaufwalzenspalt (18) der Doppelbandpresse (5) geführt.

Diese besteht aus dem beheizten Einlaufwalzenpaar (12, 13) und dem Auslaufwalzenpaar (14, 15), wobei um das Walzenpaar (12, 14) bzw. (13, 15) jeweils ein Endlosstahlband (16, 17) gespannt ist. Der Einlaufwalzenspalt (18) ist in seinem Querschnitt verstellbar, sodaß eine Vorkalibrierung der vorimprägnierten Glasfasermatte (30, 30') erfolgt. Ferner werden durch den Anpreßdruck der Walzen (12, 13) die vorimprägnierten Glasfasermatten ohne Zusatz eines Klebers beidseitig auf den geschäumten Thermoplasten (39') kaschiert, sodaß ein Vorverbund (36) für die Sandwichplatte (40) entsteht. Dieser wird den Kühlplatten (22, 22') zugeführt, durch welche die Wärme aus dem Vorverbund (36) abgeführt wird. Die in den Kühlplatten angebrachten, vom Kühlmedium, beispielsweise Wasser durchflossenen Bohrungen (24, 24') sind so angeordnet, daß die Flußrichtungen der gegenüberliegenden Platten (24) einerseits und (24') andererseits entgegengesetzt sind. Dadurch wird gewährleistet, daß die Eigenspannungen in den thermoplastischen Materialien, welche üblicherweise beim Extrudieren entstehen, abgebaut werden. Ferner dienen die Kühlplatten (22, 22') als Anpreßplatten und sind daher mit den Gleitfolien (23, 23') an der den Endlosstahlbändern (16, 17) zugekehrten Seite versehen; sie sind am Rahmen der Doppelbandpresse (5) mittels Druckzylindern (21, 21') befestigt und werden daher beidseitig am Vorverbund (36) angepreßt. Um innerhalb der Druckzone das Ausfließen der Thermoplastschmelze zu verhindern, werden zu beiden Seiten des Vorverbundes (36) die Führungsbänder (35, 35') welche in etwa die Dicke des Vorverbundes (36) aufweisen, seitlich in der Doppelbandpresse (5) endlos mitgeführt.

Durch die Maßnahme der Kühlplatten (22, 22') wird die Wärmeabfuhr aus den thermoplastischen Materialien bewirkt, sodaß das erfindungsgemäße Verfahren energiesparend geführt werden kann. Ferner kann der Anpreßdruck der Kühlplatten gering gehalten werden, beispielsweise bei 1 bar, um das ausreichende Verpressen zu der endgefertigten Sandwichplatte (40) zu bewirken. Das ist darauf zurückzuführen, daß die ausreichende Vorimprägnierung der Glasfasernmatten (10,11) bereits am Düsenspaltausgang (27, 27') der Imprägnierdüsen (3, 4) erfolgt, sodaß der Anpreßdruck nicht zum Imprägnieren, sondern für die Ausbildung des Vorverbundes (36) der endgefertigten Sandwichplatte (40) dient. Die abgekühlte Sandwichplatte (40) wird nach dem Passieren des Auslaufwalzenpaares (14, 15) einer Anordnung von Rundmessern (6) zugeführt, an welchen ihre Seitenkanten geschnitten werden. Danach wird die Sandwichplatte (40) in an sich bekannter Weise durch die Schlagschere (7) abgelängt.

Diese Sandwichplatte weist beispielsweise eine Biegefestigkeit von 80 N/mm² und einen E-Modul von 2200 auf.

### Gewerbliche Anwendung

Die erfindungsgemäß hergestellte Sandwichplatte kann zur Herstellung von Formteilen für die Innenausstattung von Kraftfahrzeugen verwendet werden. Sie ist bei dieser Anwendung besser elastisch beanspruchbar als die üblicherweise eingesetzte Sandwichplatte auf Sperrholzbasis, die lediglich eine Biegefestigkeit von 50 N/mm² aufweist. Sie ist dennoch ebenso mechanisch belastbar wie die genannte Sandwichplatte auf Sperrholzbasis, da sie ebenso einen E-Modul von 2200 aufweist, welcher ein bekanntes Kriterium hinsichtlich der Steifigkeit eines mechanisch beanspruchbaren Bauteils ist.

## Patentansprüche

1. Verfahren zur Herstellung einer Sandwichplatte bestehend aus einer geschäumten thermoplastischen Kernschicht (39), welche beidseitig mit glasfasermattenverstärkten, thermoplastischen Außenschichten (25, 25') kleberfrei verbunden ist, dadurch gekennzeichnet, daß
1) für die Ausbildung der Außenschichten (25, 25') in Form von glasfasermattenverstärkten Thermoplasten gleichzeitig zwei Glasfasermatten (10, 11) durch die Düsenspalte (3', 4') der Imprägnierdüsen (3, 4) geführt werden, welche von den Extrudern (1, 2) mit den Thermoplastschmelzen (26, 28) regelbar gespeist werden, und daß jeweils zwei Schmelzströme (26', 26") und (28', 28") gebildet werden, welche am Düsenspaltausgang (27, 27') auf die Ober- und Unterseite der Glasmatten (10, 11) aufgetragen werden, wobei die Vorimprägnierung der Glasfasermatten stattfindet, und daß
2) diese mit Thermoplast vorimprägnierten Glasmatten (30, 30'), zusammen mit dem durch den Extruderdüsenspalt (37) transportierten, geschäumten Thermoplasten (39'), welcher zur Ausbildung der Kernschicht (39) dient, in den Einlaufwalzenspalt (18) der Doppelbandpresse (5) geführt werden, wobei die vorimprägnierten Glasfasermatten einerseits vorkalibriert und andererseits ohne Zusatz eines Klebers beidseitig auf den geschäumten Thermoplasten (39') kaschiert werden, sodaß ein Vorverbund (36) gebildet wird, welcher anschließend unter Druck mittels der Kühlplatten (22, 22') zu der Sandwichplatte (40) verpreßt wird.

2. Verfahren nach Anspruch 1, dadurch gekennzeichnet, daß die thermoplastischen Materialien für die Kern- und die Außenschichten aus derselben Gruppe von Kunststoffen, vorteilhafterweise aus der Gruppe der Polyolefine ausgewählt werden.

3. Verfahren nach Anspruch 2, dadurch gekennzeichnet, daß das thermoplastische polyolefinische Material Polypropylen ist.

4. Verfahren nach einem der Ansprüche 1 bis 3 dadurch gekennzeichnet, daß die Glasfasermatten (10, 11) im Düsenspalt (3', 4') und der geschäumte Thermoplast (39') im Düsenspalt (37) vorgewärmt werden.

5. Verfahren nach einem der Ansprüche 1 bis 4, dadurch gekennzeichnet, daß als Thermoplastschmelze (26, 28) eine niedrigviskose Polypropylen-Schmelze, welche gegebenenfalls Additive wie Peroxide enthält, eingesetzt wird.

6. Verfahren nach einem der Ansprüche 1 bis 5, dadurch gekennzeichnet, daß der Schmelzestrom (26', 26") und (28', 28") durch den im Verteilerblock (8, 9) angebrachten Schmelzschieber (29, 29') regelbar ist.

7. Verfahren nach einem der Ansprüche 1 bis 6, dadurch gekennzeichnet, daß die Glasfasermatte aus geschnittenen, wirr gelegten und/oder unidirektionalen und/oder direktionalen ungeschnittenen Glasfasern mit einem Flächengehalt von 450 bis 1300 g/m² besteht.

8. Verfahren nach einem der Ansprüche 1 bis 7, dadurch gekennzeichnet, daß die vorimprägnierten Glasfasermatten (30, 30') im in seinem Querschnitt verstellbaren Einlaufwalzenspalt (18) vorkalibriert werden.

9. Verfahren nach einem der Ansprüche 1 bis 8, dadurch gekennzeichnet, daß der Vorverbund (36) für die Ausbildung der Sandwichplatte (40) in der Druckzone mit max. 2 bar verpreßt wird.

10. Verfahren nach einem der Ansprüche 1 bis 9, dadurch gekennzeichnet, daß der durch den Extruderdüsenspalt (37) transportierte geschäumte Thermoplast (39') aus Polypropylen besteht.

## Claims

1. A method of producing a sandwich board, comprising a foamed thermoplastic core layer (39) which on both sides is bonded without adhesive to glass fibre mat reinforced thermoplastic outer layers (25,25'), characterised in that
1) for the formation of the outer layers (25,25') in the form of glass fibre mat reinforced thermoplastic material simultaneously two glass fibre mats (10,11) are directed through nozzle orifices (3',4') of impregnating nozzles (3,4), to which molten thermoplastic material (26,28) is fed adjustably by extruders (1,2), and in that in each case two melt flows (26',26") and (28',28") are formed which at the nozzle orifice outlet (27,27') are applied to the upper side and underside of the glass mats (10,11), whereupon the preimpregnation of the glass fibre mats takes place, and in that
2) these glass mats (30,30') preimpregnated with thermoplastic material are directed, together with the foamed thermoplastic material (39') which is conveyed through the extruder nozzle orifice (37) and which serves to form the core layer (39), into a roller inlet gap (18) of a double belt press (5), wherein the preimpregnated glass fibre mats are precalibrated, on the one hand, and, on the other hand, without the addition of an adhesive are laminated on to both sides of the foamed thermoplastic material (39') so that a precomposite (36) is formed which is subsequently pressed under pressure by means of cooling plates (22,22') to form the sandwich board (40).

2. A method according to Claim 1, characterised in that the thermoplastic materials for the core layer and outer layers are chosen from the same group of plastics materials, advantageously from the group of the polyolefins.

3. A method according to Claim 2, characterised in that the thermoplastic polyolefinic material is polypropylene.

4. A method according to any one of Claims 1 to 3, characterised in that the glass fibre mats (10,11) are preheated in the nozzle orifice (3',4') and the foamed thermoplastic material (39') is preheated in the nozzle orifice (37).

5. A method according to any one of Claims 1 to 4, characterised in that a low viscosity polypropylene melt is used as the molten thermoplastic material (26,28), which optionally contains additives such as peroxides.

6. A method according to any one of Claims 1 to 5, characterised in that the melt flow (26'26") and (28',28") can be adjusted by slide valves (29,29') for the molten material mounted in a distributor block (8,9).

7. A method according to any one of Claims 1 to 6, characterised in that the glass fibre mat consists of cut, randomly disposed and/or unidirectional and/or directional uncut glass fibres with a surface content of 450 to 1300 g/m².

8. A method according to any one of Claims 1 to 7, characterised in that the preimpregnated glass fibre mats (30,30') are precalibrated in the roller inlet gap (18) which can be adjusted in its cross-section.

9. A method according to any one of Claims 1 to 8, characterised in that the precomposite (36) for the formation of the sandwich board (40) is pressed in the pressing zone at a maximum of 2 bar.

10. A method according to any one of Claims 1 to 9, characterised in that the foamed thermoplastic material (39') conveyed through the extruder nozzle gap (37) consists of polypropylene.

## Revendications

1. Procédé de fabrication d'une plaque en sandwich se composant d'une couche de coeur thermoplastique alvéolaire (39) qui est reliée sans adhésif, des deux côtés, à des couches extérieures thermoplastiques (25, 25') qui sont renforcées par les mats en fibres de verre, caractérisé en ce que
(i) pour réaliser les couches extérieures (25, 25') sous la forme de matériaux thermoplastiques renforcés par des mats en fibres de verre, on fait passer de façon guidée, simultanément deux mats ou nappes en fibres de verre (10, 11) à travers les fentes de filières (3', 4') des filières d'imprégnation (3, 4) qui sont alimentées de façon réglable par les extrudeuses (1, 2) en matières thermoplastiques fondues (26, 28), et en ce qu'on forme pour chacun des mats deux courants (26', 26" et 28', 28") de matière en fusion qui sont appliqués à la sortie de la fentes de filière (27, 27') sur la face supérieure et la face inférieure des mats en fibres de verre (10, 11), de manière à réaliser la préimprégnation des mats en fibres de verre, et en ce que
(ii) on fait passer de façon guidée dans l'intervalle de calandrage (18) d'entrée de la presse à double bande (5) ces mats de fibres de verre (30, 30') préimprégnés de matière thermoplastique, en même temps que et avec la matière thermoplastique alvéolaire (39') transportée à travers la fente (37) de filière d'extrudeuse et qui sert à réaliser la couche de coeur (39), de telle manière que les mats en fibres de verre préimprégnés soient, d'une part précalibrés, et d'autre part contrecollés sans apport d'un adhésif sur chacun des deux côtés de la matière thermoplastique alvéolaire (39'), de façon à former un précomposite (36), qui est ensuite comprimé sous pression à l'aide des plaques froides (22, 22') pour donner la plaque en sandwich (40).

2. Procédé selon la revendication 1, caractérisé en ce que les matériaux thermoplastiques pour la couche de coeur et les couches extérieures sont choisis dans le même groupe de matières plastiques, de préférence dans le groupe des polyoléfines.

3. Procédé selon la revendication 2, caractérisé en ce que le matériau thermoplastique polyoléfinique est le propylène.

4. Procédé selon l'une des revendications 1 à 3, caractérisé en ce que les mats en fibres de verre (10, 11) dans la fentes de filières (3', 4') et la matière thermoplastique alvéolaire (39') dans la fente de filière (37) sont préchauffés.

5. Procédé selon l'une des revendications 1 à 4, caractérisé en ce qu'on utilise comme matériau ou matière thermoplastique fondue (27, 28) un polypropylène fondu à faible viscosité, qui contient le cas échéant des additifs tels que des peroxydes.

6. Procédé selon l'une des revendications 1 à 5, caractérisé en ce que le courant de matière fondue (26', 26" et 28', 28") est réglable par le tiroir coulissant de fusion (29, 29') monté dans le bloc de distribution (8, 9).

7. Procédé selon l'une des revendications 1 à 6, caractérisé en ce que le mat ou nappe en fibres de verre se compose de fibres de verre coupées disposées de façon embrouillée et/ou de fibres de verre non coupées unidirectionnelles et/ou directionnelles avec un taux d'application en surface de 450 à 1300 g/m².

8. Procédé selon l'une des revendications 1 à 7, caractérisé en ce que les mats préimprégnés en fibres de verre (30, 30') sont précalibrés dans l'intervalle de calandrage d'entrée (18) à section transversale réglable.

9. Procédé selon l'une des revendications 1 à 8. caractérisé en ce que le précomposite (36) pour la réalisation de la plaque en sandwich (40) est comprimé dans la zone de pressage à une pression maximum de 2 bars.

10. Procédé selon l'une des revendications 1 à 9, caractérisé en ce que la matière thermoplastique alvéolaire (39') transportée à travers la fente (37) de filière d'extrudeuse se compose de polypropylène.
